# EUROPÄISCHE PATENTANMELDUNG

(11) **EP 3 590 666 A1**
(43) Veröffentlichungstag der Anmeldung: **08.01.2020**
(21) Anmeldenummer: 18182014.3
(22) Anmeldetag: 05.07.2018
(51) Int. Cl.: B25J 15/04

(54) **WERKZEUGKOPPLUNGSSYSTEM FÜR EINEN KÜCHENROBOTER**

(71) Anmelder: IPR-Intelligente Peripherien für Roboter GmbH, 75031 Eppingen (DE)
(72) Erfinder: Doll, Fredy, 77855 Achern (DE); Haberkern, Achim, 74235 Erlenbach (DE); Kollmar, Thomas, 74223 Flein (DE)
(74) Vertreter: Patentanwaltskanzlei Cartagena

(57) **Zusammenfassung**

Die Erfindung betrifft ein Werkzeugkopplungssystem (20) für einen Roboter, insbesondere für einen Küchenroboter (100), zur Ankopplung eines Werkzeugs (120) an einem Roboterarm (102). Das Werkzeugkopplungssystem (20) verfügt über eine roboterarmseitige Kopplungseinrichtung (30) und über eine werkzeugseitige Kopplungseinrichtung (40). Diese Kopplungseinrichtungen (30, 40) sind zur formschlüssig wirkenden Kopplung miteinander ausgebildet.

Es wird vorgeschlagen, dass die Kopplungseinrichtungen (30, 40) zur Kopplung mittels eines Kopplungsbajonetts (50) ausgebildet sind, wobei die eine Kopplungseinrichtung zu diesem Zweck eine Bajonettnocke (52) aufweist und die andere Kopplungseinrichtung eine tangentiale Bajonettnut (54) aufweist, in die die Bajonettnocke (52) im gekoppelten Zustand hineinragt, so dass ein axiales Abziehen der werkzeugseitige Kopplungseinrichtung (40) von der roboterarmseitige Kopplungseinrichtung (30) formschlüssig unterbunden ist.

## Beschreibung

### ANWENDUNGSGEBIET UND STAND DER TECHNIK

Die Erfindung betrifft den Bereich der Roboter und insbesondere den Bereich der Küchenroboter. Die Erfindung betrifft in diesem Themenfeld die Ankopplung von Werkzeugen an einem Roboterarm eines solchen Roboters.

Unter einem Küchenroboter im Sinne der Erfindung wird ein Roboter bezeichnet, der in einer Küche an einem Zubereitungsplatz oder Verarbeitungsplatz für Lebensmittel an fester Position vorgesehen oder mittels eines Schienensystems verfahrbar ist, wobei der Küchenroboter über einen in sich beweglichen Roboterarm verfügt, mittels dessen Küchenwerkzeuge gehandhabt werden können. Der Küchenroboter kann dadurch Zubereitungsschritte durchführen, beispielsweise das Wenden von Burgerfleisch auf einem Grill. Solche Küchenroboter sind derzeit noch nicht sehr verbreitet. Es ist allerdings absehbar, dass insbesondere für mechanisch einfache Tätigkeiten im Küchenbereich eine regelmäßige Verwendung in der Gastronomie zu erwarten ist. Insbesondere im Bereich der Systemgastronomie mit vergleichsweise einfachen Gerichten und sich häufig wiederholenden Arbeitsschritten bietet sich die Verwendung solcher Küchenroboter an.

Im Bereich der Robotik sind Gestaltungen allgemein üblich, bei denen das mittels des Roboterarms des Roboters geführte Werkzeug austauschbar ist, beispielsweise durch einen menschlichen Eingriff oder durch ein automatisiertes Werkzeugwechselsystem. Zur Verwendung eines solchen automatischen Werkzeugwechselsystems sind das Werkzeug und der Roboterarm mit einem Werkzeugkopplungssystem mit einer roboterarmseitigen und einer werkzeugseitigen Kopplungseinrichtung versehen, die miteinander verbunden und verriegelt werden können und zum Zwecke des Wechsels wieder voneinander trennbar sind. Ein vom Roboterarm getrenntes und beispielsweise stationäres Werkzeugmagazin nimmt dabei die Wechselwerkzeuge auf. Der Roboterarm fährt das Werkzeugmagazin an, entkoppelt dort das bestehende Werkzeug und legt dieses ab und koppelt anschließend ein neues Werkzeug an.

Es wurde festgestellt, dass der Bereich der Küchenroboter dabei besondere Anforderungen stellt. Küchenroboter werden auch in bestehenden Küchen eingesetzt, die nur begrenzte räumliche Möglichkeiten für ein Werkzeugmagazin oder Hilfsaggregate aufweisen. Auch sind hydraulische Aktoren zur Verriegelung/Entriegelung aufgrund fehlender Druckluftsysteme in üblichen Küchen häufig nicht möglich.

Zudem stellen Küchenroboter ein besonderes Themenfeld dar, da die Zubereitung von Speisen zu besonders hohen hygienischen Anforderungen führt. Werkzeugkopplungssysteme mit komplexen roboterarmseitigen Geometrien zum Zwecke derVerriegelung von Werkzeugen erschweren die Reinigung erheblich. Auch sind Küchenroboter aufgrund ihrer vergleichsweise geringen Baugröße und der geringen erforderlichen Kräfte im Betrieb in der Regel nicht mit sehr starken Aktoren ausgerüstet, was bei der Konzeption eines geeigneten Werkzeugwechselsystems berücksichtigt werden sollte.

### AUFGABE UND LÖSUNG

Aufgabe der Erfindung ist es, ein einfaches und kompaktes Werkzeugwechselsystem für einen Roboter zur Verfügung zu stellen, welches sich insbesondere zur Verwendung bei einem Küchenroboter eignet.

Zur Lösung dieser Aufgabe wird ein Werkzeugkopplungssystem zur Ankopplung eines Werkzeugs an einem Roboterarm vorgeschlagen, welches in gattungsüblicher Weise über eine roboterarmseitige Kopplungseinrichtung und eine werkzeugseitige Kopplungseinrichtung verfügt. Diese Kopplungseinrichtungen sind zur formschlüssig wirkenden Kopplung miteinander ausgebildet.

Die erfindungsgemäß vorgesehenen Kopplungseinrichtungen sind zur Kopplung mittels eines Kopplungsbajonetts ausgebildet, wobei die eine Kopplungseinrichtung zu diesem Zweck eine Bajonettnocke aufweist und die andere Kopplungseinrichtung eine tangentiale Bajonettnut aufweist, in die die Bajonettnocke im gekoppelten Zustand hineinragt, so dass ein axiales Abziehen der werkzeugseitigen Kopplungseinrichtung von der roboterarmseitige Kopplungseinrichtung formschlüssig unterbunden ist. Unter der axialen Richtung im Sinne der des Werkzeugkopplungssystems wird die Richtung der Drehachse verstanden, um die die Kopplungseinrichtungen beim Koppeln und Trennen der Kopplungseinrichtungen gegeneinander verdreht werden.

Unter einem Kopplungsbajonett wird im Sinne der Erfindung ein Verbindungssystem verstanden, welches über die genannten Elemente der Bajonettnocke einerseits und der Bajonettnut andererseits verfügt. Die Bajonettnut ist in Richtung der Nocke nach innen weisend oder nach außen weisend offen. Die Bajonettnut ist nicht umlaufend geschlossen ausgebildet, sondern ist in mindestens einem Winkelbereich unterbrochen, so dass die an der anderen Kopplungseinrichtung vorgesehene Bajonettnocke durch diesen offenen Winkelbereich eingeführt werden kann, um durch eine anschließende Drehbewegung der Kopplungseinrichtungen gegeneinander in die Bajonettnut einzufahren. Nach Abschluss dieser Drehbewegung können die Kopplungseinrichtungen nicht rein axial voneinander getrennt werden, da die Wandungen der Bajonettnut und die mindestens eine Bajonettnocke dies formschlüssig verhindern.

Die jeweilige Wirkungsweise der Bajonettnut und der darin befindlichen Bajonettnocke sind identisch. Ebenso wie die Bajonettnocke bildet auch der seitliche Rand der Bajonettnut eine hinterschneidungsfähige Struktur, wobei sowohl die Bajonettnocke als auch der genannte seitliche Rand nicht umlaufend geschlossen ausgebildet sein dürfen, um in dem jeweiligen offenen Winkelbereich die jeweils andere Struktur bei axialer Annäherung einfahren lassen zu können.

Möglich, aber nicht zwingend, ist es, dass die Bajonettnut über einen speziellen Aufnahmebereich für die Bajonettnocke verfügt, der in axialer Richtung gegenüber der Bajonettnut im Übrigen versetzt ist. In diesem Aufnahmebereich kann die Bajonettnocke im gekoppelten Zustand angeordnet sein, so dass eine zusätzliche Sicherung erreicht ist, da die zum Entkoppeln erforderliche Drehbewegung erst nach einer axialen Verlagerung der Bajonettnocke innerhalb der Bajonettnut möglich ist.

Die Verwendung eines Kopplungsbajonetts hat sich als besonders vorteilhaft für Küchenroboter herausgestellt. Ein darauf basierendes Werkzeugkopplungssystem kann sehr einfach aufgebaut sein. Des Weiteren ist ein hierfür geeignetes Magazin baulich einfach und preisgünstig. Je nach Ausgestaltung kann es vollständig passiv ausgebildet sein, also ohne bewegliche Aktoren jenseits der Aktoren des Roboterarms, gebaut werden. Die für das Ankoppeln und Trennen des Kopplungsbajonetts erforderliche Drehbewegung kann ohne zusätzliche Aggregate durch eine Drehbewegung der roboterarmseitigen Kopplungseinrichtungen mittels der ohnehin am Roboterarm vorgesehenen Drehbarkeit realisiert werden, wenn zu diesem Zweck die werkzeugseitige Kopplungseinrichtungen drehfest gehalten wird, insbesondere durch die Gestaltung des entsprechenden Aufnahmeplatzes im Werkzeugmagazin.

Das Bajonett kann im einfachsten Falle bereits ohne zusätzliche Verriegelung genutzt werden. Dies bedeutet, dass alleine die bei Kopplung durch eine Drehbewegung verursachte Positionierung der Bajonettnocke in der Bajonettnut das Werkzeug am Roboterarm hält.

Ohne eine Sicherungseinrichtung, die eine ungewünschte Drehbewegung der Kopplungseinrichtungen im Betrieb verhindert, wäre dann allerdings die Gefahr recht groß, dass es aufgrund einersolchen ungewünschten Drehbewegung zu einem Lösen des Werkzeugs kommt.

Das Werkzeugkopplungssystem verfügt daher vorzugsweise auch über eine Sicherungseinrichtung, mittels derer eine Drehbewegung der Kopplungseinrichtungen relativ zueinander unterbunden oder erschwert wird.

Eine solche Sicherungseinrichtung kann formschlüssig wirken, also eine Drehbewegung der Kopplungseinrichtungen gegeneinander durch bei versuchter Drehbewegung aneinander anschlagende Flächen verhindern. Hierzu kann beispielsweise an einer der Kopplungseinrichtungen ein verfahrbarer exzentrisch angeordneter Riegel vorgesehen sein, der in einer Verriegelungsstellung in eine korrespondierende Ausnehmung der anderen Kopplungseinrichtung eingefahren ist und hierdurch die Drehbewegung unterbindet.

Als besonders vorteilhaft wird jedoch eine kraftschlüssige Sicherungseinrichtung angesehen, mittels derer die Kopplungseinrichtung in axialer Richtung lokal gegeneinander gepresst werden, so dass ein vergleichsweise hohes Drehmoment aufgewendet werden muss, um die Kopplungseinrichtungen gegeneinander zu verdrehen. Die gegeneinander gepressten Flächen können dabei an der Bajonettnut und der Bajonettnocke selbst oder an anderen Teilen der Oberflächen der Kopplungseinrichtung vorgesehen sein. Eine solche kraftschlüssige Sicherungseinrichtung kann leichter als eine formschlüssige reinigungsfreundliche ausgestaltet sein.

Zum Anpressen der Kopplungseinrichtungen aneinander kommen verschiedene Möglichkeiten in Betracht. So können die Kopplungseinrichtungen beispielsweise durch eine Federkraft oder durch eine Magnetkraft gegeneinander kraftbeaufschlagt werden.

Eine Sicherungseinrichtung, die dafür vorgesehen ist, eine hohe Reibkraft beim Verdrehen der Kopplungseinrichtungen gegeneinander zu verursachen, kann als statische Sicherungseinrichtung ausgebildet sein. Dies bedeutet, dass beim beabsichtigten Entkoppeln eines Werkzeugs ebenso wie beim unbeabsichtigten Lösen im Betrieb das gleiche Drehmoment zur Überwindung der Bajonettkupplung erforderlich ist.

Von Vorteil und im Falle einer formschlüssig wirkenden Sicherungseinrichtung zwingend ist eine schaltbare Sicherungseinrichtung, die einen gesicherten und einen ungesicherten Zustand einnehmen kann. Die unterschiedlichen Zustände der Sicherungseinrichtung wirken sich im Falle einer kraftschlüssig arbeitenden Sicherungseinrichtung dahingehend aus, dass die Kopplungseinrichtungen in den beiden Zuständen in unterschiedlichem Maße aneinander angepresst werden, so dass das erforderliche Drehmoment zum Lösen der Kopplungseinrichtungen voneinander ebenfalls unterschiedlich ist. So kann hohe Reibung im Betrieb ein unbeabsichtigtes Ablösen unterbinden und geringe Reibung oder im Wesentlichen reibungsfreie Drehbarkeit der Kopplungseinrichtungen ein willentliches Abkoppeln des Werkzeugs in einem Werkzeugmagazin erleichtern.

Eine besonders bevorzugte Form einer Sicherungseinrichtung sieht vor, dass die Sicherungseinrichtung als magnetische Sicherungseinrichtung ausgebildet ist. Sie weist mindestens einen Magneten an einer der Kopplungseinrichtungen auf, mittels dessen die andere Kopplungseinrichtung im gekoppelten Zustand angezogen oder abgestoßen wird, so dass hierdurch Reibung zwischen den Kopplungseinrichtungen verursacht wird, die die Drehbewegung der Kopplungseinrichtungen relativ zueinander unterbindet oder erschwert.

Die durch einen Magneten bewirkte Reibung weist den besonderen Vorteil auf, dass der Magnet geschützt im Innenraum der Kopplungseinrichtung angeordnet sein kann und durch eine das Magnetfeld nicht oder nicht vollständig abschirmende Gehäusewandung hindurch auf die andere Kopplungseinrichtung wirkt.

Die Sicherungseinrichtung kann derart ausgebildet sein, dass eine der Kopplungseinrichtungen, vorzugsweise die roboterarmseitige Kopplungseinrichtung, ein begrenzt bewegliches Sicherungselement als Teil der Sicherungseinrichtung aufweist, welches durch Verlagerung zwischen zwei Endlagen den gesicherten bzw. den ungesicherten Zustand der Sicherungseinrichtung bewirken kann.

Im Falle der genannten magnetischen Sicherungseinrichtung ermöglicht dies, die von Magneten der einen Kopplungseinrichtung auf die andere Kopplungseinrichtung wirkende Kraft zu verändert. Insbesondere wird dies erreicht durch eine Gestaltung, bei der das genannten bewegliche Sicherungselement mindestens einen als Permanentmagneten gestalteten Magneten umfasst, der durch die Bewegung des Sicherungselements gegenüber der Kopplungseinrichtung, an der das Sicherungselement begrenzt beweglich vorgesehen ist, von der anderen Kopplungseinrichtung variabel beabstandet werden kann, so dass die andere Kopplungseinrichtung in variablem Maße magnetisch kraftbeaufschlagt wird.

Die Verlagerung des beweglichen Sicherungselements, insbesondere des beweglichen Sicherungselements mit Permanentmagnet, kann durch einen Aktor erfolgen, der Teil der Kopplungseinrichtung ist. Ein solcher Aktor kann ein elektrischer Aktor sein, beispielsweise ein Elektromotor oder ein Elektromagnet. Es kann aber auch ein pneumatisch/hydraulisch betriebener Aktor sein, insbesondere in Art eines linear verlagerbare Kolbens.

Eine Alternative zu einem solchen integrierten aktiven Aktors sieht vor, dass zur Verlagerung des Sicherungselements innerhalb der Kopplungseinrichtung eine von außerhalb der Kopplungseinrichtung zugängliche Druckfläche vorgesehen ist, die bei Kraftbeaufschlagung eines externen Druckelements das Sicherungselement verlagert.

Das Sicherungselement ist in einem solchen Fall gleichsam passiv angetrieben. Erst der Kontakt der genannten Druckfläche mit einem korrespondierenden externen Druckelement ermöglicht die Verlagerung, insbesondere vorzugsweise gegen die Kraft einer in der Kopplungseinrichtung integrierten Federeinrichtung. Das externe Druckelement kann insbesondere durch einen Stößel oder durch eine Druckfläche am Werkzeugmagazin gebildet werden, wie im Weiteren noch näher erläutert wird.

Die Erfindung betrifft weiterhin auch ein Werkzeugwechsel- und -kopplungssystem zum Zwecke der Lagerung und des Tausches von Werkzeugen eines Roboters. Wie bereits eingangs genannt, handelt es sich dabei insbesondere um einen Küchenroboter, an dessen Roboterarm Küchenwerkzeuge wechselbar vorgesehen sind.

Das erfindungsgemäße Werkzeugwechsel- und -kopplungssystem umfasst neben einem Werkzeugkopplungssystems der beschriebenen Art weiterhin ein Magazin zur Aufnahme einer Mehrzahl von Werkzeugen.

Das Magazin stellt Aufnahmeplätze zur Verfügung, die derart an die Werkzeuge angepasst sind, dass die Werkzeuge in einer Lagerposition nicht um die durch eine Kopplungsrichtung definierte Drehachse drehbar sind. Dies ist Voraussetzung dafür, dass der Roboterarm mit der roboterarmseitigen Kopplungseinrichtung durch Bewegung des letzten Gliedes des Roboterarms die gegen Abziehen des Werkstücks wirkende formschlüssige Kopplung der Bajonettnut mit der Bajonettnocke bewirkt.

Vorzugsweise ist das Magazin derart an die Werkzeuge angepasst, dass Führungsnuten und Führungsstege auf der Seite des Magazins und auf der Seite des Werkzeugs eine Linearführung bilden. Diese bewirkt, dass das Werkzeug nur in einer definierten Einschubrichtung in den Aufnahmeplatz eingefügt werden kann und im Aufnahmeplatz gegen jegliche Richtung mit Ausnahme entgegen der Einschubrichtung fixiert ist.

Küchenwerkzeuge, die vorzugsweise als Teil dieses Magazins vorgesehen sind, stellen meist sehr einfache Werkzeuge dar, die sich voneinander primär durch ihre Formgebung unterscheiden. Komplexere Werkzeuge, die Strom- oder Flüssigkeitszuführungen benötigen, finden im Küchenbereich nur selten Verwendung. Gerade wegen dieser einfachen Ausgestaltung der Werkzeuge ist die genannte Bajonettkupplung von Vorteil. Ein Nachteil einer Bajonettkupplung liegt im nicht ganz einfachen Herstellen solcher Zuführungen. Auch da diese im Bereich des Küchenroboters meist nicht benötigt werden, ist die Bajonettkupplung hier besonders zweckmäßig. Das Magazin eines erfindungsgemäßen Werkzeugwechsel- und -kopplungssystems umfasst daher vorzugsweise mindestens ein Küchenwerkzeug, welches keinerlei Flüssigkeitsauslass umfasst und keinerlei durch eine externe Energiequelle gespeisten Aktor aufweist.

Das erfindungsgemäße Werkzeugwechsel- und -kopplungssystem ist vorzugsweise derart ausgebildet, dass das Werkzeugkopplungssystem an einem seiner beiden Kopplungseinrichtungen das oben erläuterte bewegliche Sicherungselement aufweist, welches dazu dient, eine Drehbewegung der Kopplungseinrichtungen relativ zueinander zu unterbinden oder zu erschweren.

Wie bereits erläutert, gestattet es das bewegliche Sicherungselement, eine variable kraftschlüssige Erschwerung bzw. Erleichterung der Drehbewegung zu erzielen, so dass durch Bewegung des Sicherungselements die Drehbewegung beim bestimmungsgemäßen Lösen im Magazin mit nur geringem Drehmoment möglich ist.

Bei einer Gestaltung mit internem Aktor in der Kopplungseinrichtung erfolgt diese Bewegung durch elektrisches, pneumatisches oder hydraulisches Ansteuern dieses Aktors. Hierdurch kann über die resultierende Bewegung des Sicherungselements die Verriegelung gelöst werden oder insbesondere durch Bewegung eines am Sicherungselement vorgesehenen Permanentmagneten dessen Wirkung auf die werkzeugseitige Kopplungseinrichtung derart verändert werden, dass anschließend die genannte erleichterte Drehbewegung möglich ist.

Findet die oben ebenfalls beschriebene Variante Verwendung, bei der zur Verlagerung des Sicherungselements innerhalb der Kopplungseinrichtung eine von außerhalb der Kopplungseinrichtung zugängliche Druckfläche vorgesehen ist, so kann das Magazin gemäß einer der nachfolgenden Bauarten ausgestaltet sein.

Bei einer Bauart weist das Magazin mindestens einen Aktor auf, mittels dessen ein externes Druckelement gegenüber den Aufnahmeplätzen verlagerbar ist, so dass hierdurch die von außerhalb der Kopplungseinrichtung zugängliche Druckfläche der roboterarmseitigen Kopplungseinrichtung kraftbeaufschlagbar ist. Der Aktor kann beispielsweise in Form eines linear beweglichen Stempels ausgebildet sein. Auch eine Gestaltung mit einer drehbeweglichen Nockenscheibe ist möglich.

Ein entsprechender Aktor zur Kraftbeaufschlagung des Druckelements kann einfach für mehrere Aufnahmeplätze vorgesehen sein, womit gemeint ist, dass der Aktor für jeden Aufnahmeplatz über eine Betätigungsfläche verfügt, die unabhängig vom durch den Roboterarm angefahrenen Aufnahmeplatz die Auslenkung des Sicherungselements auf Seiten des Roboterarms gestattet. Alternativ kann auch je Aufnahmeplatz ein eigener Aktor mit eigenem Druckelement vorgesehen sein.

Eine andere Bauart zur Kraftbeaufschlagung der von außerhalb der Kopplungseinrichtung zugänglichen Druckfläche zum Zwecke des Ankoppelns oder Abkoppelns eines Werkzeugs sieht vor, dass mindestens einem Aufnahmeplatz des Magazins eine ortsfest zum Aufnahmeplatz vorgesehene magazinseitige Betätigungsfläche zugeordnet ist, die quasi passiv agiert.

Beim Heranführen eines an den Roboterarm angekoppelten Werkzeugs an den betreffenden Aufnahmeplatz gelangen diese Betätigungsfläche und der von außerhalb der Kopplungseinrichtung zugängliche Druckfläche der roboterarmseitigen Kopplungseinrichtung in Kontakt miteinander, so dass das Sicherungselement innerhalb der Kopplungseinrichtung hierdurch ausgelenkt wird.

Dabei ist es von besonderem Vorteil, wenn die Betätigungsfläche gegenüber einer durch Führungsnuten bzw. Führungsstege definierte Zustellrichtung der roboterarmseitigen Kopplungseinrichtung schräggestellt ist, so dass die Betätigungsfläche beim Anfahren des Aufnahmeplatzes zunehmend die von außerhalb der Kopplungseinrichtung zugängliche Druckfläche verlagert und das Sicherungselement innerhalb der Kopplungseinrichtung hierdurch auslenkt. Um Selbsthemmung zu vermeiden, liegt der Winkel zwischen der Zustellrichtung und der Betätigungsfläche vorzugsweise im Bereich von 25° oder weniger.

Die Zustellrichtung ist insbesondere durch die Einschubrichtung der genannten Führung definiert, entlang derer das noch angekoppelte Werkzeug zum Aufnahmeplatz gelangt. Gegenüber der Zustellrichtung ist die magazinseitige Betätigungsfläche derart angewinkelt, dass während dieser Bewegung die Auslenkung der Druckfläche erfolgt. Die Schrägstellung führt dazu, dass dabei eine vergleichsweise geringe Kraft erforderlich ist.

Die Erfindung betrifft weiterhin auch einen Küchenroboter zur Handhabung eines Küchenwerkzeugs. Dieser Küchenroboter verfügt über einen Roboterarm, der vorzugsweise in Art eines mindestens 4-Achs-Roboterarms und insbesondere eines mindestens 6-Achs-Roboterarms ausgebildet ist. Weiterhin verfügt ein erfindungsgemäßer Küchenroboter über mindestens ein Küchenwerkzeug, welches mittels des Roboterarms geführt werden kann. Hierbei handelt es sich beispielsweise um einen Löffel oder einen Fleischwender. Dieses Küchenwerkzeug ist bei einem erfindungsgemäßen Küchenroboter mittels eines Werkzeugkopplungssystems der beschriebenen am Roboterarm befestigt.

Vorzugsweise ist der Küchenroboter Teil eines Küchenrobotersystems, zu dem neben dem erfindungsgemäßen Küchenroboter auch ein Werkzeugmagazin gehört. Der Wechsel des Werkzeugs erfolgt dabei über ein erfindungsgemäßes Werkzeugwechsel- und -kopplungssystem.

Ebenfalls von der Erfindung umfasst ist eine Gastronomieküche mit mindestens einem Zubereitungsplatz oder Verarbeitungsplatz für Nahrungsmittel, die dafür ausgebildet ist, dass die Verarbeitungsschritte zumindest teilweise durch einen Küchenroboter ausgeführt werden. Die erfindungsgemäße Gastronomieküche ist daher mit einem Küchenroboter oder Küchenrobotersystem der beschriebenen Art ausgebildet.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt exemplarisch eine Gastronomieküche mit einem Zubereitungsplatz und ein zur Bedienung des Zubereitungsplatzes vorgesehenes Küchenrobotersystem mit Küchenroboter.
Fig. 2 zeigt in vergrößerter Darstellung ein Werkzeugkopplungssystem, mittels dessen ein Küchenwerkzeug am Roboterarm des Küchenroboters lösbar befestigt ist.
Fig. 3 und 4 zeigen ein erstes Ausführungsbeispiel des Werkzeugkopplungssystems im gekoppelten Zustand sowie in Form einer Einzeldarstellung der wesentlichen Komponenten.
Fig. 5A und 5B verdeutlichen die Ablage des Küchenwerkzeugs im Magazin.
Fig. 6 und 7 verdeutlichen den Aufbau des Werkzeugkopplungssystems der Fig. 3 und 4 in einem gesicherten Zustand für den Betrieb und einen entsicherten Zustand für den Werkzeugwechsel.
Fig. 8 und 9 zeigen ein zweites Ausführungsbeispiel des Werkzeugkopplungssystems im gekoppelten Zustand sowie in Form einer Einzeldarstellung der wesentlichen Komponenten.
Fig. 10 verdeutlicht den Aufbau des Werkzeugkopplungssystems der Fig. 8 und 9.
Fig. 11A und 11B zeigen die Entsicherung des Werkzeugkopplungssystems der Fig. 8 und 9 im Magazin.
Fig. 12 und 13 zeigen ein drittes Ausführungsbeispiel des Werkzeugkopplungssystems im gekoppelten Zustand sowie in Form einer Einzeldarstellung der wesentlichen Komponenten.
Fig. 14 verdeutlicht den Aufbau des Werkzeugkopplungssystems der Fig. 12 und 13.
Fig. 15 zeigt das Werkzeugkopplungssystem der Fig. 12 und 13 sowie ein daran angepasstes Magazin.
Fig. 16A bis 16D zeigen die Entsicherung des Werkzeugkopplungssystems der Fig. 12 und 13.

### DETAILLIERTE BESCHREIBUNG DER AUSFÜHRUNGSBEISPIELE

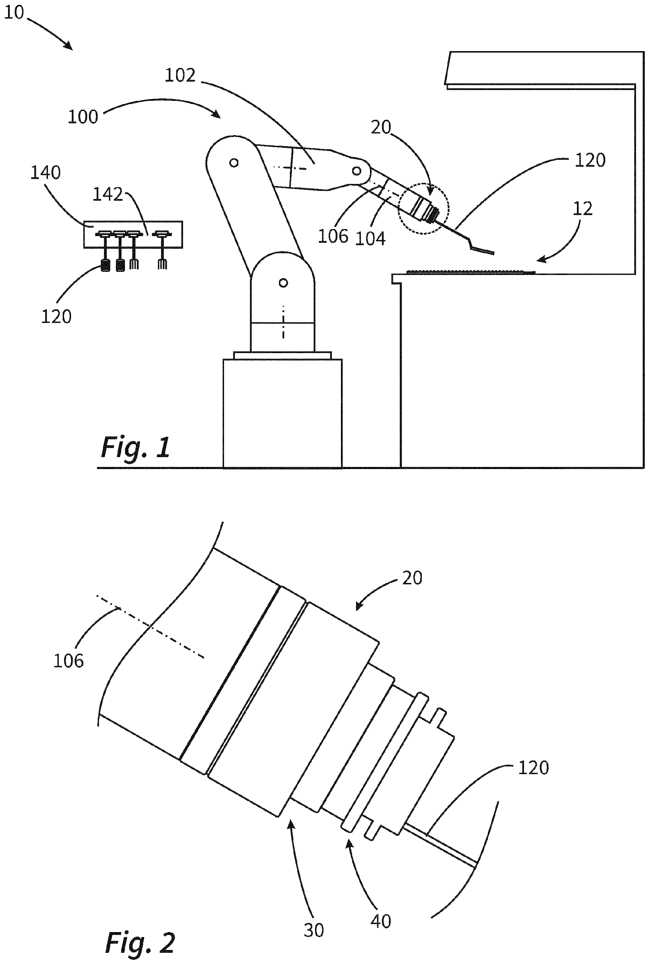

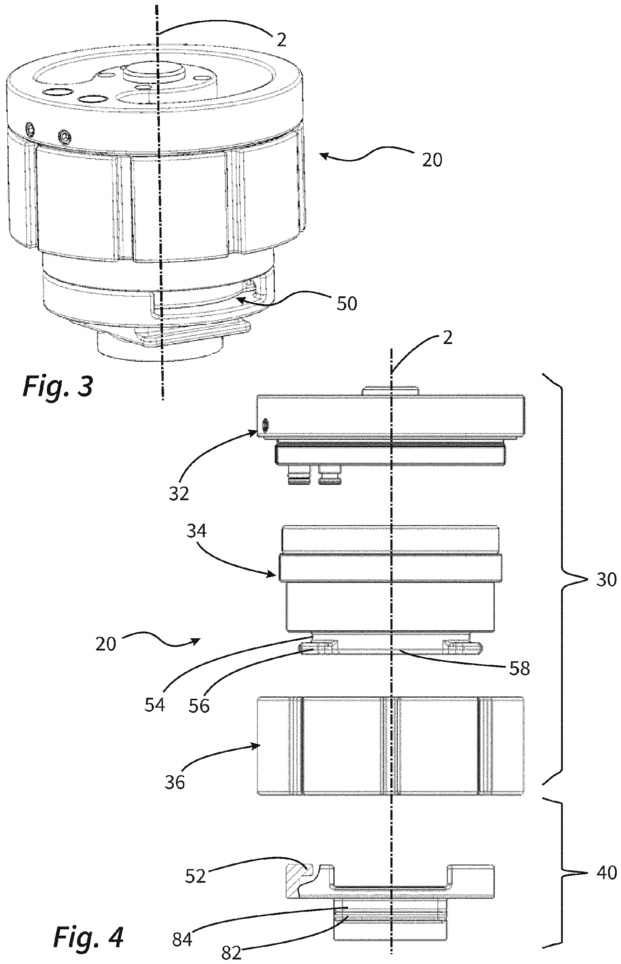

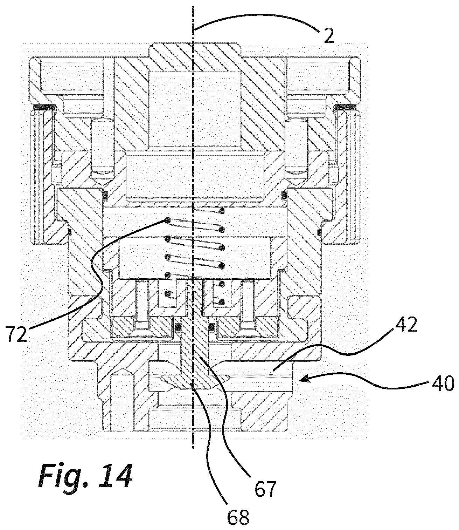

Die Fig. 1 und 2 verdeutlichen den Anwendungsbereich der Erfindung beispielhaft. Die Fig. 3 bis 7, 8 bis 11B und 12 bis 16D zeigen drei Ausführungsbeispiele im Hinblick auf das erfindungswesentliche Werkzeugkopptungssystem.

Zunächst zu den Fig. 1 und 2: Fig. 1 zeigt eine Gastronomieküche 10 mit einem Zubereitungsplatz 12, der vorliegend in Art eines Grills ausgebildet ist. Zur Zubereitung von Speisen auf diesem Grill ist in der Gastronomieküche 10 ein Küchenroboter 100 vorgesehen, der über einen Roboterarm 102 verfügt. Dieser Roboterarm 102 ist als 6-Achs- Roboterarm ausgebildet und weist dementsprechend eine Vielzahl von Gliedern 104 auf, die um Querachsen oder Längsachsen gegenüber in anderen Gliedern beweglich sind. Am letzten Glied 104, welches gegenüber dem vorangegangenen Glied um die Drehachse 106 drehbar ist, ist ein Werkzeugkopplungssystem 20 vorgesehen, mittels dessen ein Werkzeug 120 am Roboterarm 102 angekoppelt ist.

Das in Fig. 2 vergrößert dargestellte Werkzeugkopplungssystem 20 verfügt über eine roboterarmseitige Kopplungseinrichtung 30 und eine werkzeugseitige Kopplungseinrichtung 40, die ein Ankoppeln und Lösen des Werkzeugs 120 vom Roboterarm 102 gestatten.

Wie in Fig. 1 dargestellt ist, umfasst das Robotersystem ein Magazin 140 mit einer Mehrzahl von in Aufnahmeplätzen 142 gehaltenen Werkzeugen 120, die jeweils über eine werkzeugseitige Kopplungseinrichtung 40 verfügen.

Bestimmungsgemäß erfolgt ein Werkzeugwechsel, indem der Roboterarm 102 das zuvor angekoppelte Werkzeug 120 in einen Aufnahmeplatz 142 einfügt, das Werkzeug 120 dort entkoppelt wird und ein anderes Werkzeug 120 mittels seiner eine werkzeugseitigen Kopplungseinrichtung 40 anschließend an die roboterarmseitige Kopplungseinrichtung 30 angekoppelt wird. Abschließend wird das neu angekoppelte Werkzeug 120 aus dem Magazin 140 herausgenommen.

Fig. 3 und 4 zeigen ein erstes Ausführungsbeispiel des Werkzeugkopplungssystems 20. Dieses umfasst in der schon beschriebenen Art eine roboterarmseitige Kopplungseinrichtung 30 und eine werkzeugseitige Kopplungseinrichtung 40. Wie aus Fig. 4 ersichtlich ist, untergliedert sich die im Regelbetrieb fest am Roboterarm verbleibende Kopplungseinrichtung 30 in einen unmittelbar am Roboterarm angebrachten Roboterflansch 32 sowie einen Hauptabschnitt 34, der mittels einer Mutter 36 am Flansch 32 befestigt ist und im Zuge eines Werkzeugwechsels auch befestigt bleibt.

Die werkzeugseitige Kopplungseinrichtung 40 weist an ihrer Unterseite nicht näher dargestellte Befestigungsmittel auf, an denen das Werkzeug angebracht ist. Alle Werkzeuge 120 im Werkzeugmagazin 140 verfügen über jeweils eine eigene werkzeugseitige Kopplungseinrichtung 40, mit der sie fest verbunden sind.

Die im Betrieb stattfindende Kopplungund Entkopplung der werkzeugseitigen Kopplungseinrichtung 40 von der roboterarmseitigen Kopplungseinrichtung30 erfolgt mittels eines Kopplungsbajonetts 50, welches auf Seiten der Kopplungseinrichtung 30 durch eine Bajonettnut 54 gebildet wird, die mittels eines Stegs 56 begrenzt ist. Der Steg 56 ist nicht umlaufend geschlossen, sondern weist beidseitig jeweils einen Einschubbereich 58 auf. Korrespondierend hierzu sind an der Kopplungseinrichtung 40 zwei nach innen weisende Bajonettnocken 52 vorgesehen. In einer bezogen auf die Bajonettachse 2 um 90° gegenüber der Darstellung der Fig. 3 und 4 relativ verdrehten Ausrichtung können die Kopplungseinrichtungen 30, 40 somit axial aneinander heranbewegt werden, um dann in die Drehstellung der Fig. 3 und 4 verdreht zu werden.

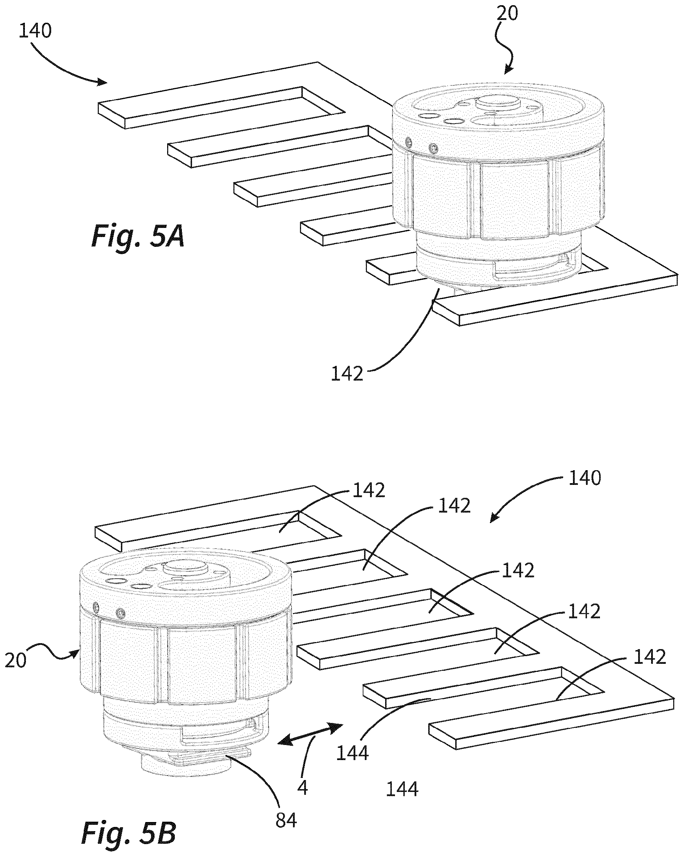

Um eine solche Relativdrehung alleine mittels der Drehbarkeit des Gliedes 104 um die Drehachse 106 zu ermöglichen, sind die Werkzeuge im Bereich der werkzeugseitigen Kopplungseinrichtung 40 im Magazin 140 drehgesichert vorgehalten. Aus Fig. 5A ist eine schematische Darstellung des Werkzeugmagazins 140 zu ersehen. Dieses weist fünf Aufnahmebereiche 142 auf, die jeweils durch Führungsstege 144 beidseitig begrenzt sind. Die Führungsstege weisen dabei eine Beabstandung auf, die geringfügig größer ist als die Beabstandung zweier einander gegenüberliegender Führungsnuten 84 an der Kopplungseinrichtung 40. Wenn die Kopplungseinrichtung 40 entsprechend der Fig. 5A in einem Aufnahmebereich 142 aufgenommen ist, ist sie somit nicht drehbar gegenüber dem Aufnahmeplatz 142 und einzig entlang einer Einschubrichtung 4 verlagerbar. Eine Drehbewegung der roboterarmseitigen Kopplungseinrichtung 30 durch Drehen des Gliedes 104 um die Drehachse 106 ist daher gleichzeitig eine Relativdrehbewegung der Bajonettnocken 52 gegenüber den Bajonettnuten 54.

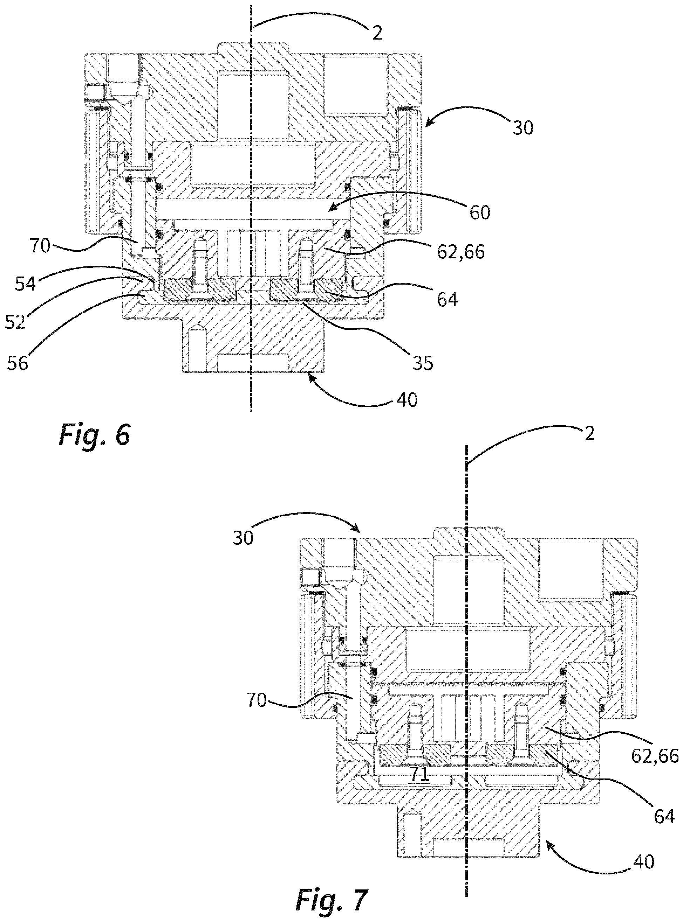

Zur Erschwerung einer Relativbewegung der Kopplungseinrichtungen 30, 40 im Betrieb und somit zur Verhinderung eines ungeplanten Ablösens des Werkzeugs 120 ist eine Sicherungseinrichtung 60 innerhalb der Kopplungseinrichtung 30 vorgesehen, die anhand der Fig. 6 und 7 erläutert wird. Die Sicherungseinrichtung 60 verfügt über ein in Axialrichtung 2 begrenzt bewegliches Sicherungselement 62, welches bei diesem Ausführungsbeispiel in Art eines Kolbens ausgebildet ist, der eine volumenvariable Pneumatikkammer 71 begrenzt. An diesem Sicherungselement 62 ist ein ringförmiger Permanentmagnet 64 vorgesehen. In dem in Fig. 6 dargestellten Zustand befindet sich das Sicherungselement 62 mit dem Permanentmagneten 64 in seiner der Kopplungseinrichtung 40 nächsten Stellung. Das magnetisierbare Metall der Kopplungseinrichtung 40 wird daher in starkem Maße an eine Stirnfläche 35 der Kopplungseinrichtung 30 angezogen. Diese Kraft führt dazu, dass eine Drehbewegung der Kopplungseinrichtungen 30, 40 gegeneinander ein hohes Drehmoment erfordert, welches durch den der Drehachse 106 zugeordneten Aktor nicht aufgebracht werden kann. Um beim Lösen der Kopplungseinrichtung 40 diese Reibkraft zu vermindern, wird das Sicherungselement 62 mit dem Permanentmagneten 64 in der in Fig. 7 verdeutlichten Weise axial verlagert. Dies erfolgt vorliegend dadurch, dass über einen Pneumatikkanal 70 Druckluft in die Pneumatikkammer 71 geführt wird, welche hierdurch das als Kolben wirkende Sicherungselement 62 verschiebt. In dem beabstandeten Zustand der Fig. 7 ist eine Drehbewegung der Kopplungseinrichtung 40 gegenüber der Kopplungseinrichtung 30 bei deutlich verringerter Reibung möglich. Das erforderliche Moment kann durch den der Drehachse 106 zugeordneten Aktor erbracht werden.

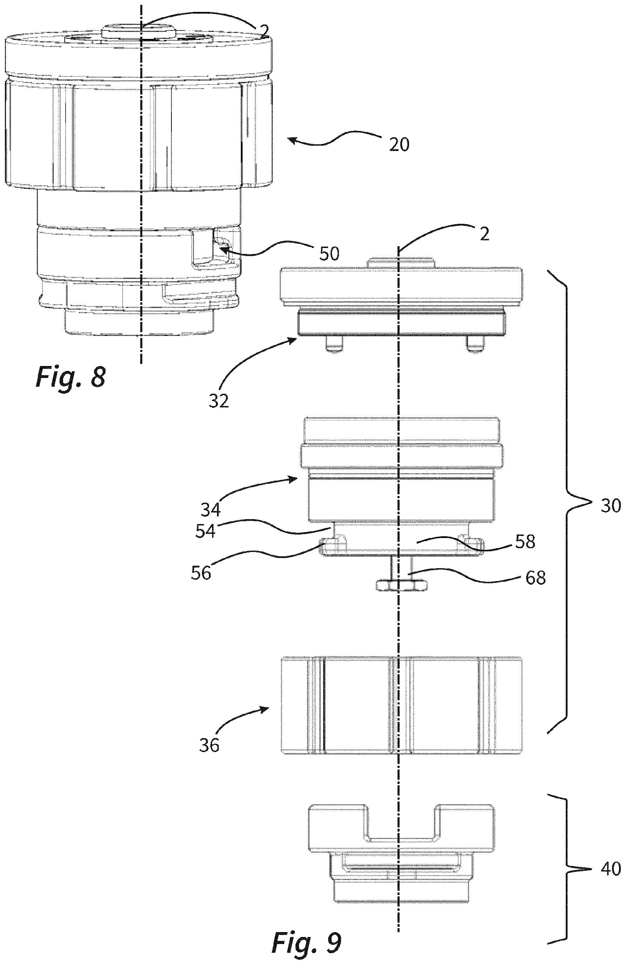

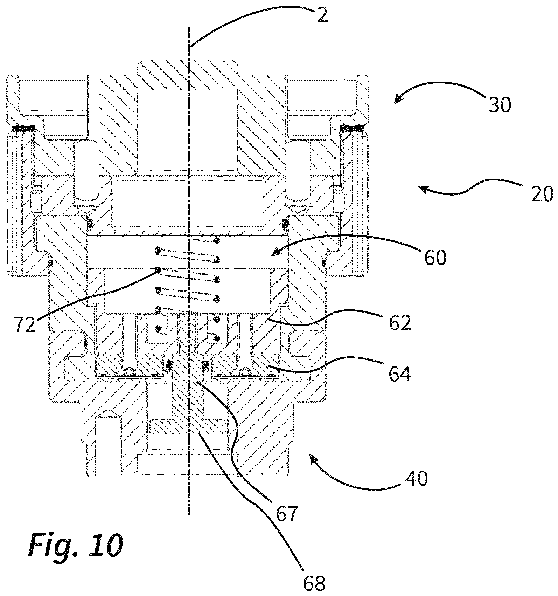

Beim Ausführungsbeispiel der Fig. 8 bis 11 ist der grundsätzliche Aufbau des Werkzeugkopplungssystems 20 aus zwei Kopplungseinrichtungen 30, 40 sowie die Ausgestaltung der Kopplungseinrichtungen mit Kopplungsbajonett 50 und Führungsnuten 84 funktionsidentisch zum ersten Ausführungsbeispiel. Allerdings fehlt es, wie anhand der Fig. 10 ersichtlich ist, bei diesem Ausführungsbeispiel innerhalb der Kopplungseinrichtung 30 an einem als Kolben 66 ausgebildeten Sicherungselement 62. Stattdessen ist das Sicherungselement 62 bei dieser Ausgestaltung mit einem stirnseitig aus dem Innenraum der Kopplungseinrichtung 30 herausgeführten Stift 67 versehen, dessen distales Ende durch eine Druckfläche 68 gebildet wird. Die Kopplungseinrichtung 40 ist mit einer Durchbrechung versehen, so dass die Druckfläche 68 von außen zugänglich ist.

Auch bei dieser Gestaltung wird ein unbeabsichtigtes Lösen durch Permanentmagneten 64 am begrenzt verlagerbaren Sicherungselement 62 erzielt. Des Weiteren ist auch bei diesem Ausführungsbeispiel vorgesehen, dass der Permanentmagnet 64 zusammen mit dem Sicherungselement 62 nach oben ausgelenkt wird, um die Reibkraft beim Lösen der Kopplungseinrichtung 40 zu vermindern.

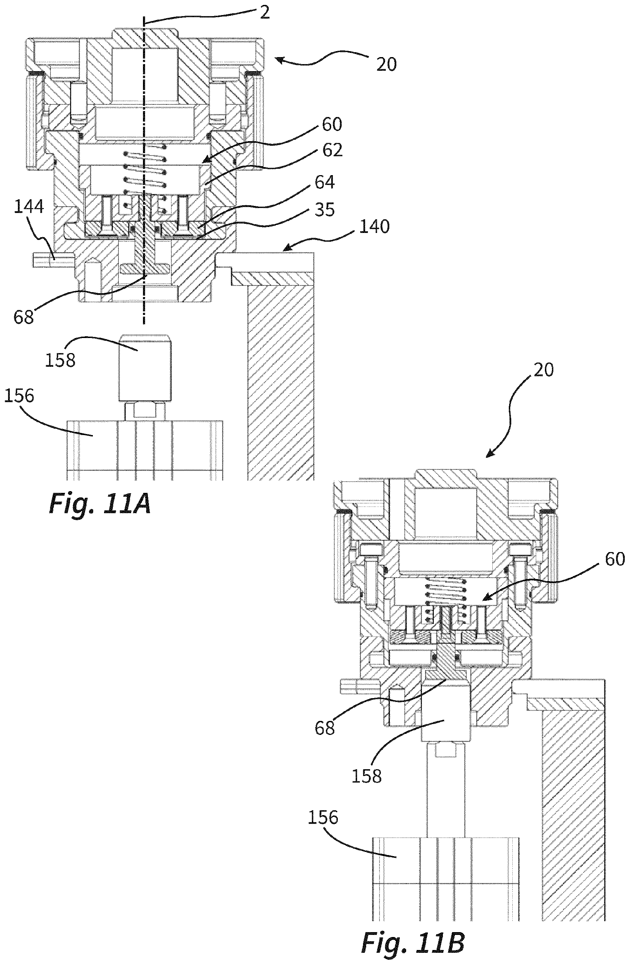

Die Verlagerung des Sicherungselements 62 erfolgt jedoch bei diesem Ausführungsbeispiel über die Druckfläche 68. Zur Betätigung dieser Druckfläche 68 ist in der durch die Fig. 11A und 11B verdeutlichten Weise am Magazin 140 ein Druckelement 158 vorgesehen, welches mittels eines Aktors 156 in Axialrichtung 2 verlagerbar ist. Nach Einschieben des angekoppelten Werkzeugs in das Magazin 140 wird das Druckelement 158 entsprechend der Darstellung der Fig. 11B nach oben verlagert, gelangt dabei in Kontakt mit der Druckfläche 68 und verschiebt diese gemeinsam mit dem Permanentmagneten 64 nach oben. Im dadurch hergestellten Zustand der Fig. 11B ist dann ein Drehen der Kopplungseinrichtungen 30, 40 gegeneinander bei nur geringer Reibkraft möglich.

Gleichermaßen wird auch beim Ankoppeln eines neuen Werkzeugs der Permanentmagnet 64 von der Kopplungseinrichtung 40 weg gedrückt, wenn die roboterarmseitige Kopplungseinrichtung 30 in die Kopplungseinrichtung 40 eintaucht.

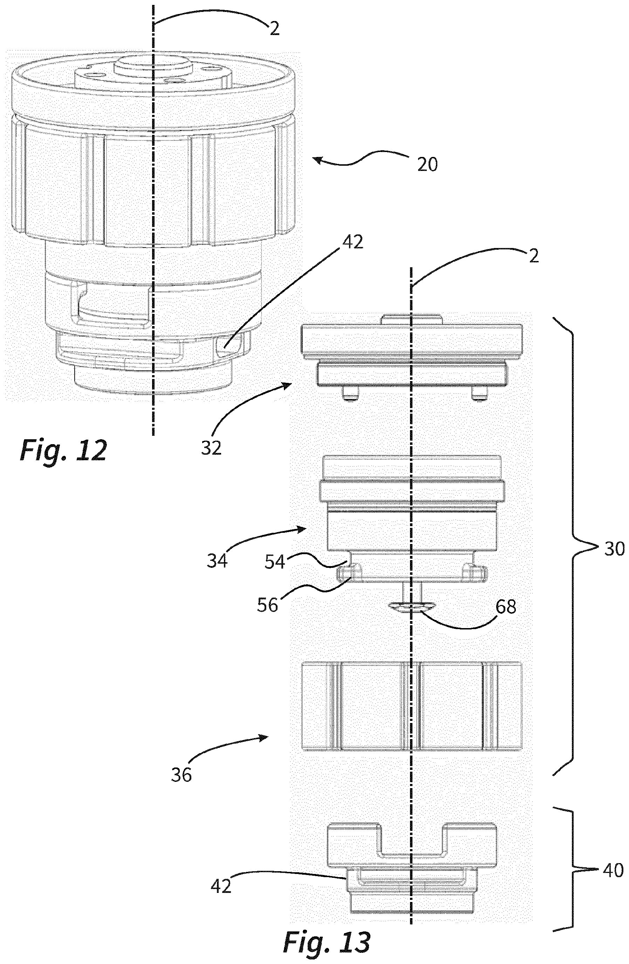

Bei der Ausgestaltung gemäß der Fig. 12 bis 16D ist übereinstimmend mit dem vorangegangenen Ausführungsbeispiel eine Druckfläche 68 vorgesehen, mittels derer ein Sicherungselement 62 sowie der daran angebrachte Permanentmagnet 64 zum Zwecke der Reibungsreduktion verlagert werden kann.

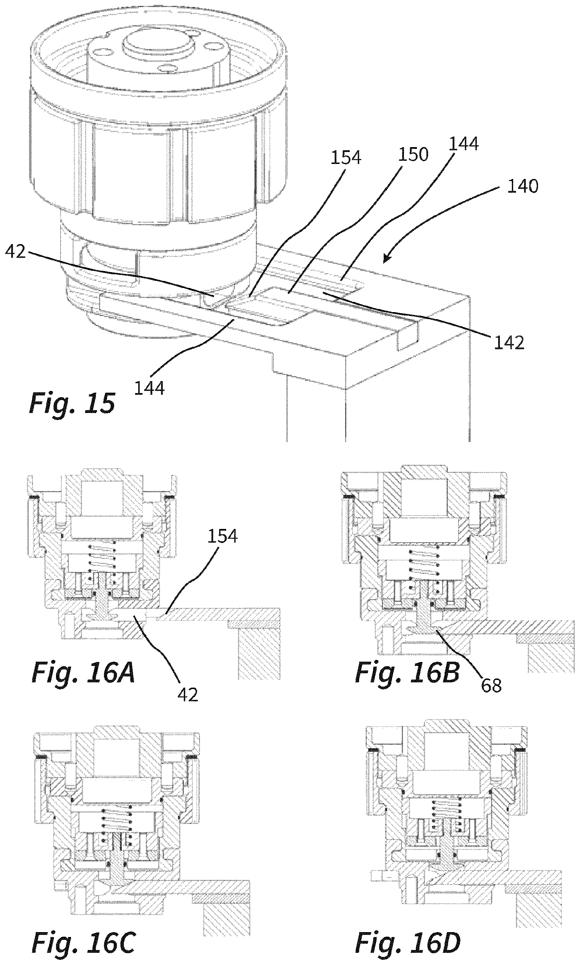

Die Besonderheit bei diesem Ausführungsbeispiel ist anhand der Fig. 15 besonders gut zu erkennen. Einem jeden Aufnahmeplatz 142 ist bei dieser Gestaltung ein zentrischer Sporn 150 zugeordnet, an dessen distalem Ende eine schräggestellte Betätigungsfläche 154 vorgesehen ist. Korrespondierend zu diesem Sporn 150 ist an der werkzeugseitigen Kopplungseinrichtung 40 ein radial ausgerichteter Schacht 42 vorgesehen, der ausreichend dimensioniert ist, um den Sporn 150 aufzunehmen.

Wie anhand der Fig. 16A bis 16D ersichtlich ist, führt dies dazu, dass beim Einschieben des gekoppelten Werkzeugkopplungssystems in den Aufnahmeplatz 142 der Sporn 150 in den Schacht 42 einfährt und die distale schräggestellte Betätigungsfläche 154 dabei unter die Druckfläche 68 greift und diese bei fortschreitender Einschubbewegung anhebt. Wie auch beim vorausgegangenen Ausführungsbeispiel lässt sich hierdurch ein Zustand herstellen, bei dem das Sicherungselement mitsamt dem Permanentmagneten von der Kopplungseinrichtung 40 soweit beabstandet ist, dass ein reibungsarmes Drehen der roboterarmseitigen Kopplungseinrichtung 30 gegenüber der werkzeugseitigen Kopplungseinrichtung 40 möglich ist.

## Patentansprüche

1. Werkzeugkopplungssystem (20) für einen Roboter (100), insbesondere für einen Küchenroboter (100), zur Ankopplung eines Werkzeugs (120) an einem Roboterarm (102) des Roboters (100) mit den folgenden Merkmalen:
a. das Werkzeugkopplungssystem (20) verfügt über eine roboterarmseitige Kopplungseinrichtung (30), und
b. das Werkzeugkopplungssystem verfügt über eine werkzeugseitige Kopplungseinrichtung (40), und
c. die Kopplungseinrichtungen (30, 40) sind zur formschlüssig wirkenden Kopplung miteinander und zur Trennung voneinander ausgebildet,
**dadurch gekennzeichnet, dass**
d. die Kopplungseinrichtungen (30, 40) zur Kopplung mittels eines Kopplungsbajonetts (50) ausgebildet sind, wobei die eine Kopplungseinrichtung zu diesem Zweck eine Bajonettnocke (52) aufweist und die andere Kopplungseinrichtung eine tangentiale Bajonettnut (54) aufweist, in die die Bajonettnocke (52) im gekoppelten Zustand hineinragt, so dass ein axiales Abziehen der werkzeugseitige Kopplungseinrichtung (40) von der roboterarmseitige Kopplungseinrichtung (30) formschlüssig unterbunden ist.

2. Werkzeugkopplungssystem (20) nach Anspruch 1 mit dem folgenden zusätzlichen Merkmal:
a. an bezogen auf eine Kopplungsachse des Kopplungsbajonetts einander gegenüberliegenden Seiten der werkzeugseitigen Kopplungseinrichtung sind Führungsstege oder Führungsnuten (82,84) vorgesehen, die zur drehgesicherten Führung an korrespondierenden Führungsnuten oder Führungsstegen (144) eines Werkzeugmagazins (140) ausgebildet sind.

3. Werkzeugkopplungssystem (20) nach Anspruch 1 oder 2 mit dem folgenden zusätzlichen Merkmal:
a. das Werkzeugkopplungssystem (20) verfügt über eine Sicherungseinrichtung (60), mittels derer eine Drehbewegung der Kopplungseinrichtungen (30, 40) relativ zueinander unterbunden oder erschwert wird,
vorzugsweise mit einem der folgenden zusätzlichen Merkmale:
b. die Sicherungseinrichtung (60) ist als kraftschlüssig wirkende Sicherungseinrichtung (60) ausgebildet, die die Drehbewegung der Kopplungseinrichtungen (30,40) erschwert, oder
c. die Sicherungseinrichtung ist als formschlüssig wirkende Sicherungseinrichtung ausgebildet, die die Drehbewegung der Kopplungseinrichtungen unterbindet.

4. Werkzeugkopplungssystem (20) nach Anspruch 3 mit dem folgenden zusätzlichen Merkmal:
a. die Sicherungseinrichtung (60) ist als magnetische Sicherungseinrichtung (60) ausgebildet und weist mindestens einen Magneten (64) an einer der Kopplungseinrichtungen (30) auf, mittels dessen die andere Kopplungseinrichtung (40) im gekoppelten Zustand angezogen oder abgestoßen wird, so hierdurch Reibung zwischen den Kopplungseinrichtungen (30,40) verursacht wird, die die Drehbewegung der Kopplungseinrichtungen (30, 40) relativ zueinander unterbindet oder erschwert.

5. Werkzeugkopplungssystem (20) nach Anspruch 3 oder 4 mit dem folgenden zusätzlichen Merkmal:
a. die Sicherungseinrichtung (60) ist als schaltbare Sicherungseinrichtung (60) ausgebildet, die einen gesicherten und einen ungesicherten Zustand einnehmen kann.

6. Werkzeugkopplungssystem (20) nach Anspruch 5 mit dem folgenden zusätzlichen Merkmal:
a. eine der Kopplungseinrichtungen (30), vorzugsweise die roboterarmseitige Kopplungseinrichtung (30), weist ein bewegliches Sicherungselement (62) als Teil der Kopplungseinrichtung (30) auf, welches durch Verlagerung zwischen zwei Endlagen den gesicherten bzw. den ungesicherten Zustand der Sicherungseinrichtung (60) bewirken kann.

7. Werkzeugkopplungssystem (20) nach Anspruch 6 mit dem folgenden zusätzlichen Merkmal:
a. das Sicherungselement (62) umfasst mindestens einen Permanentmagneten (64), der durch die Bewegung des Sicherungselements (62) gegenüber der Kopplungseinrichtung (30), an der das Sicherungselement (62) vorgesehen ist, von der anderen Kopplungseinrichtung (40) variabel beabstandet werden kann, so dass die andere Kopplungseinrichtung (40) in variablem Maße magnetisch kraftbeaufschlagt wird.

8. Werkzeugkopplungssystem (20) nach einem der Ansprüche 6 oder 7 mit dem folgenden zusätzlichen Merkmal:
a. zur Verlagerung des Sicherungselements (62) innerhalb der Kopplungseinrichtung (30) ist in der betreffenden Kopplungseinrichtung (30) ein elektrisch oder pneumatisch/hydraulisch betriebener Aktor (66) vorgesehen, vorzugsweise in Form eines Elektromagneten, Elektromotors oder eines Kolbens (66).

9. Werkzeugkopplungssystem nach einem der Ansprüche 6 oder 7 mit dem folgenden zusätzlichen Merkmal:
a. zur Verlagerung des Sicherungselements (62) innerhalb der Kopplungseinrichtung (30) ist eine von außerhalb der Kopplungseinrichtung (30) zugängliche Druckfläche (68) vorgesehen, die bei Kraftbeaufschlagung durch ein externes Druckelement (158, 154) das Sicherungselement verlagert.

10. Werkzeugwechsel- und -kopplungssystem zum Zwecke der Lagerung und des Tausches von Werkzeugen (120) eines Roboters (100), insbesondere eines Küchenroboters (100):
a. das Werkzeugwechsel- und -kopplungssystem umfasst ein Magazin (140) mit einer Mehrzahl von Aufnahmeplätzen (142) zur Aufnahme einer Mehrzahl von Werkzeugen (120), und
b. das Werkzeugwechsel- und -kopplungssystem umfasst ein Werkzeugkopplungssystem (20) zur Ankopplung eines Werkzeugs (120) an einem Roboterarm (102) des Roboters (100),
**gekennzeichnet durch** das folgende Merkmal:
d. das Werkzeugkopplungssystems (20) ist nach einem der Ansprüche 1 bis 9 ausgebildet.

11. Werkzeugwechsel- und -kopplungssystem nach Anspruch 10 mit dem folgenden zusätzlichen Merkmal:
a. das Magazin (140) weist mindestens einen Aktor (156) auf, mittels dessen ein externes Druckelement (158) gegenüber den Aufnahmeplätzen (142) verlagerbar ist, so dass hierdurch die von außerhalb der Kopplungseinrichtung (30) zugängliche Druckfläche (68) der roboterarmseitigen Kopplungseinrichtung (30) kraftbeaufschlagbar und das Sicherungselement (62) innerhalb der Kopplungseinrichtung (30) auslenkbar ist.

12. Werkzeugwechsel- und -kopplungssystem nach Anspruch 10 mit dem folgenden zusätzlichen Merkmal:
a. mindestens einem Aufnahmeplatz (142) des Magazins (140) ist eine ortsfest zum Aufnahmeplatz (142) vorgesehene magazinseitige Betätigungsfläche (154) zugeordnet, die bei Heranführen eines an den Roboterarm (102) angekoppelten Werkzeugs (120) an den Aufnahmeplatz (142) in Kontakt mit der von außerhalb der Kopplungseinrichtung (30) zugängliche Druckfläche (68) der roboterarmseitigen Kopplungseinrichtung (30) gelangt und das Sicherungselement (62) innerhalb der Kopplungseinrichtung (30) hierdurch auslenkt.

13. Werkzeugwechsel- und -kopplungssystem nach Anspruch 12 mit dem folgenden zusätzlichen Merkmal:
a. die Betätigungsfläche (154) ist gegenüber eine Zustellrichtung der roboterarmseitigen Kopplungseinrichtung schräggestellt, so dass die Betätigungsfläche (154) beim Anfahren des Aufnahmeplatzes (142) zunehmend die von außerhalb der Kopplungseinrichtung (30) zugängliche Druckfläche (68) verlagert und das Sicherungselement (62) innerhalb der Kopplungseinrichtung (30) hierdurch auslenkt.

14. Küchenroboter (100) zur Handhabung eines Küchenwerkzeugs (120) mit den folgenden Merkmalen:
a. der Küchenroboter (100) verfügt über einen Roboterarm (102), vorzugsweise in Art eines mindestens 4-Achs-Roboterarms und insbesondere eines mindestens 6-Achs-Roboterarms, und
b. der Küchenroboter (100) verfügt über mindestens ein Küchenwerkzeug (120), welches mittels des Roboterarms (102) geführt werden kann, und
c. das Küchenwerkzeug (120) ist mittels eines Werkzeugkopplungssystems (20) am Roboterarm befestigt,
**gekennzeichnet durch** das folgende Merkmal:
d. das Werkzeugkopplungssystems (20) ist nach einem der Ansprüche 1 bis 9 ausgebildet.

15. Gastronomieküche (10) mit mindestens einem Zubereitungsplatz (12) oderVerarbeitungsplatz für Nahrungsmittel, **gekennzeichnet durch** das folgende Merkmal:
a. die Gastronomieküche (10) weist mindestens ein Küchenroboter nach Anspruch 14 auf.
